# EUROPEAN PATENT SPECIFICATION

(11) **EP 1 442 944 B1**
(45) Date of publication and mention of the grant of the patent: **03.01.2007**
(21) Application number: 03023578.2
(22) Date of filing: 16.10.2003
(51) Int. Cl.: B60R 21/16

(54) **Airbag and airbag apparatus**
Gassack und Vorrichtung hierfür
Airbag et son dispositif

(30) Priority: 23.01.2003 JP 2003015110; 23.01.2003 JP 2003015111; 23.01.2003 JP 2003015109; 07.02.2003 JP 2003031139
(43) Date of publication of application: 04.08.2004
(73) Proprietor: TAKATA CORPORATION, Minato-ku, Tokyo 106-8510 (JP)
(72) Inventor: Abe, Kazuhiro, Minato-ku Tokyo 106-8510 (JP); Senoh, Rika, Minato-ku Tokyo 106-8510 (JP)
(74) Representative: Banzer, Hans-Jörg

(56) References cited:
- US-A- 5 253 892
- US-A- 6 086 092
- PATENT ABSTRACTS OF JAPAN vol. 013, no. 588 (M-912), 25 December 1989 (1989-12-25) -& JP 01 247242 A (TAKATA KK), 3 October 1989 (1989-10-03)

## Description

### [Technical Field of the Invention]

The present invention relates to an airbag which is disposed in a high-speed vehicle such as a car and which inflates in an emergency such as a collision in order to protect a human body. In particular, it relates to an airbag and an airbag system suitable for driver's seat airbag mounted to a steering.

### [Description of the Related Art]

In order to protect a passenger in an emergency such as a car collision, a variety of airbag apparatuses including a driver-side airbag apparatus have been used. Most of driver's seat airbag systems have an airbag mounted to a retainer in a folded condition and covered with a cover member called a module cover. When a car impact has been sensed by a sensor, a gas generator is activated to deploy an airbag by a gas (inflation gas) generated from the gas generator. The driver-side airbag apparatus has an airbag formed by stitching together the circumferential portions of a front panel close to a passenger and a rear panel remote from the passenger. The rear panel has an opening for engagement with a gas generator, formed at the central part thereof in order to accept the front of the inflator therein. The periphery of the opening is fixed to a retainer with bolts, pins, rivets, or the like. The rear panel has vent holes for releasing air in the airbag so as to absorb a shock when the passenger sitting in the driver's seat runs into the airbag.

Japanese Unexamined Patent Application Publication No. 1-247242 has disclosed an airbag in which an inner panel is disposed like extending between the inflator-engaging opening of the rear panel and the front panel so as to partition the inner space of the airbag into a first compartment and a second compartment. The inner panel has an approximately round shape when folded, and its outer circumferential portion is connected to an intermediate portion lying between the central portion and the circumferential portion of the front panel. The inner panel has a gas-generator-engaging opening at the central part thereof and the periphery of the opening is fixed to the retainer together with the rear panel. The inner panel has communication ports for mutual communication of the first compartment and the second compartment. When the gas generator is activated, the first compartment inflates first and the second compartment inflates subsequently. Since gas flows into the second compartment from the first compartment through the communication ports, complete inflation of the second compartment lags behind complete inflation of the first compartment. In addition, it is difficult to adjust the internal pressure or the speed of deployment of the first chamber and the second chamber individually.

Japanese Unexamined Patent Application Publication No. 2-74440 discloses a driver's seat airbag that is divided into two chambers or compartments, a central compartment and an outer peripheral compartment, by a partition panel, the central compartment being first inflated and the outer peripheral compartment being next inflated. The partition panel has a gas circulation hole. The partition panel connects the rear and the front of the airbag and has the function of preventing the forward projection of the airbag during inflation. A vent hole is provided at the central compartment.

When the airbag disclosed in Japanese Unexamined Patent Application Publication No. 2-74440 is inflated and an occupant strikes against an occupant, gas in the outer peripheral compartment easily flows out through the vent hole of the central compartment. Therefore, in order to maintain the gas pressure in the outer peripheral compartment high over a long time, a gas generator with long duration of gas generation must be used. Employing the gas generator, however, makes it difficult to control the inner pressure of the airbag.

US 6, 086, 092 A discloses an airbag according to the preamble of claim 1.

### [Problems to be Solved by the Invention]

The object of the present invention is to facilitate early inflation of the second compartment of the airbag having an inner space partitioned into the first compartment and the second compartment. A further object of the present invention is to provide an airbag, in which the internal pressure and the speed of deployment can be adjusted individually for the first compartment and the second compartment. Furthermore, it is desirable to provide such an airbag and an airbag apparatus capable of maintaining high inner pressure for a long time even with a low-capacity inflator as compared with the conventional one.

### [Means for Solving the Problems]

This object is achieved by an airbag according to claim 1. The dependent claims define preferred or advantageous embodiments of the airbag and embodiments of an airbag apparatus using such an airbag. The airbag according to the present invention has a gas-generator-engaging opening for supplying gas in a rear portion and faces an occupant in inflation on a front portion thereof, wherein the interior of the airbag is partitioned into a central first compartment facing the opening and a second compartment encircling the first compartment, wherein at least one communication part connecting the first compartment and the second compartment lies on the line extending along a gas-discharge direction of the gas generator when the airbag is inflated. The airbag comprises a single inner panel for partitioning the inner space of the airbag into the first compartment and the second compartment. The airbag may include a front panel disposed close to a passenger as its front portion and a rear panel disposed remote from the passenger as its rear portion, the circumferential portions of the front panel and the rear panel being bonded to each other, wherein the rear panel has a gas-generator-engaging opening formed at the central part thereof. The inner panel may have an opening formed at the central part thereof so as to be almost concentric with the opening of the rear panel; the front circumferential portion of the inner panel is bonded to an intermediate portion lying between the central portion and the circumferential portion of the front panel; the inner panel has the at least one communication port formed close to the rear thereof, for mutual communication of the first compartment and the second compartment.

Also, an airbag apparatus according to the present invention includes an airbag as described above and a gas generator having at least one gas-discharge opening, wherein at least the front of the gas generator is disposed in the airbag and the gas-discharge opening is disposed in the airbag; and the communication port is disposed on the line extending along gas-discharge direction of the gas-discharge opening of the gas generator when the airbag is inflated.

In the airbag and the airbag apparatus according to the present invention, the communication port for mutual communication of the first compartment and the second compartment in the airbag is disposed on the line extending along a gas-discharge direction of the gas generator disposed in the first compartment so as to extend through the gas-generator-engaging openings of the rear panel and the inner panel, that is, the communication port is disposed so as to face the gas-discharge opening of the gas generator. Accordingly, when the gas generator is activated, gas is discharged from the gas-discharge opening toward the communication port. Thus, part of the gas discharged from the gas generator flows through the communication port and is directly fed to the second compartment. With this arrangement, the second compartment inflates at an early stage.

The airbag according to the present invention may have a structure in which the rear panel has at least one vent hole formed therein, and the inner panel has at least one inner vent hole formed therein for mutual communication of the first compartment and the second compartment. With this structure, when a human body runs into the inflated airbag, a shock can be absorbed by releasing the gas in the first compartment and the second compartment through the inner vent hole and the vent hole.

The airbag apparatus according to the present invention may have a structure in which the number of said at least one gas-discharge openings is plural; the communication ports are disposed on the lines extending along gas-discharge directions of a part of the gas-discharge openings of the gas generator when the airbag is inflated; and no opening between the first compartment and the second compartment lies on the lines extending along gas-discharge directions of the remaining of the gas-discharge openings. In this case, gas discharged from the part of the gas-discharge openings (hereinafter, also referred to as second-compartment gas-discharge openings) is directly fed to the second compartment through the communication ports so as to inflate the second compartment at an early stage. Since gas discharged from the remaining of the gas-discharge openings (hereinafter, also referred to as first-compartment gas-discharge openings) strikes the panel portion of the inner panel, this gas remains mainly in the first compartment, thereby inflating the first compartment at an early stage.

In this case, the first compartment and the second compartment may be arranged so as to inflate almost simultaneously. For example, by adjusting the numbers of the first-compartment gas-discharge openings and the second-compartment gas-discharge openings and the sizes of the communication ports, the first compartment and the second compartment can be inflated almost simultaneously.

Even when the communication ports are disposed on the lines extending along the gas-discharge directions of all of the gas-discharge openings, by making the sizes of the communication ports slightly smaller so as to limit an amount of gas directly flowing into the second compartment, the first compartment and the second compartment can be inflated almost simultaneously.

In this specification, the term "almost simultaneously" means that when a lapse of time t₁ from the start of activation of the gas generator to complete inflation of the first compartment and a lapse of time t₂ from the same to complete inflation of the second compartment are defined, the ratio t₁/t₂ lies in the range from 0.9 to 1.1.

When the first compartment and the second compartment inflate almost simultaneously as described above, a surface of the largely expanded airbag facing a passenger can receive the passenger.

In the airbag apparatus of the present invention, the gas generator may include a plurality of, at least first and second, gas generating units, the gas generating units each include a gas injection port, wherein the at least one communication port opposes a gas injection port of the first gas generating unit and a gas injection port of the gas generating unit other than the first gas generating unit does not oppose the communication port in a state in which the airbag is deployed.

In such an airbag system as described above, the communication port communicating the first compartment and the second compartment in the airbag is disposed so as to oppose the gas injection port of the first gas generating unit of the gas generator disposed in the first compartment through the openings for the gas generator formed on the rear panel and the inner panel in a state in which the airbag is deployed. Therefore, when the gas generator is actuated, gas is injected from the gas injection port of the first gas generating unit toward the communication port. Therefore, gas from the first gas generating unit passes through the communication port and directly supplied into the second compartment. Accordingly, the second chamber deploys early.

In such an airbag system, since the gas injection port of the gas generating unit other than the first gas generating unit does not oppose the communication port, when the gas generator is actuated, gas from the gas generating unit other than the first gas generating unit is supplied only to the first compartment in a first place. Therefore, by adjusting outputs of the first gas generating unit and other gas generating units respectively, the internal pressure or the speed of deployment can be adjusted individually for the first compartment and the second compartment. By adjusting the timings of actuation of the first gas generating unit and other gas generating units, the timing to start deployment or the timing to complete deployment of the first compartment and the second compartment can be adjusted.

The second compartment of the airbag according to the present invention may further be partitioned into an outer-peripheral front chamber arranged on the outer periphery of the central first compartment adjacent to the front, and an outer-peripheral rear chamber arranged on the outer periphery of the central first compartment adjacent to the rear. The outer-peripheral rear chamber communicates with the exterior of the airbag through vent holes. The first compartment communicates directly with the outer-peripheral front chamber and the outer-peripheral rear chamber. The outer-peripheral front chamber and the outer-peripheral rear chamber communicate with each other only via the first compartment. The gas for inflating the airbag flows from the first compartment to the outer-peripheral front chamber and the outer-peripheral rear chamber.

With such an airbag, gas is supplied into the airbag from an opening or an inflator inserted into the opening to inflate the airbag. The gas first inflates the first compartment and then inflates the outer-peripheral front chamber and the outer-peripheral rear chamber, whereby the rear chamber is inflated via the at least one communication port. The outer-peripheral front chamber does not communicate directly with the outer-peripheral rear chamber, so that the gas in the outer-peripheral front chamber flows out through the vent holes via the first compartment and the outer-peripheral rear chamber. Consequently, the gas is held in the outer-peripheral front chamber for a long time as compared with the conventional one; thus, the outer periphery of the airbag can sufficiently absorb the impact of the occupant even with a low-capacity inflator.

Alternatively, in such an airbag with the further partitioned second compartment, the first compartment communicates directly with the outer-peripheral front chamber and the outer-peripheral rear chamber and the outer-peripheral front chamber and the outer-peripheral rear chamber communicate directly with each other. The gas for inflating the airbag flows from the first compartment to the outer-peripheral front chamber and the outer-peripheral rear chamber.

Also with such an airbag, gas is supplied into the airbag from an opening or an inflator inserted into the opening to inflate the airbag. The gas first inflates the first compartment and then inflates the outer-peripheral front chamber and the outer-peripheral rear chamber. The outer-peripheral front chamber does not communicate directly with the vent holes, so that the gas in the outer-peripheral front chamber flows out through the vent holes via the outer-peripheral rear chamber or the first compartment and the outer-peripheral rear chamber. Consequently, the gas is held in the outer-peripheral front chamber for a long time as compared with the conventional one; thus, the outer periphery of the airbag can sufficiently absorb the impact of the occupant even with a low-capacity inflator.

According to the present invention, the first compartment may be arranged to reach from the rear to the front during the inflation of the airbag. With such an arrangement, the center of the airbag is first inflated early. The outer-peripheral front chamber and the outer-peripheral rear chamber are inflated sideward from the early inflated central chamber, and so the outer periphery of the airbag is also allowed to receive the occupant early.

An airbag apparatus according to the present invention includes such an airbag and a gas generator for inflating the airbag.

Such an airbag apparatus includes an airbag having openings for supplying gas on the rear and facing an occupant in inflation on the front and an inflator for inflating the airbag. The interior of the airbag includes a central rear chamber as first compartment arranged on the rear of the center and facing the openings, a front chamber arranged on the front of the airbag, and an outer-peripheral rear chamber arranged on the outer periphery of the central rear chamber. The central rear chamber, the front chamber, and the outer-peripheral chamber communicate with one another. The gas generator includes a plurality of gas generator units with different gas-generation timings.

With such an airbag system, when the inflator is activated, the central rear chamber is first inflated, from which the gas is supplied to the front chamber and the outer peripheral rear chamber to inflate the entire airbag. With the airbag system, the inflator has a plurality of gas generators with different gas-generation timings, so that the inner pressure of the inflated airbag can be maintained high for a long time.

In the airbag system, the front chamber of the airbag may occupy substantially the whole of the front of the airbag. With such an arrangement, the inner pressure of substantially the entire front can be maintained high for a long time.

### [Description of the Embodiment]

Preferred embodiments of the present invention will be described with reference to the accompanying drawings.

### [Brief Description of the Drawings]

Fig. 1 is a sectional view of an airbag and an airbag apparatus according to an embodiment of the present invention.
Fig. 2 is a sectional view of the inflating airbag shown in Fig. 1.
Fig. 3 is an exploded perspective view of the airbag and the airbag apparatus shown in Fig. 1.
Fig. 4 is a cross-sectional view of an airbag system according to another embodiment of the present invention.
Fig. 5 is a cross-sectional view of the airbag system shown in Fig. 4 when the deployment of an airbag is completed.
Fig. 6 is an exploded perspective view of the airbag system shown in Fig. 4.
Fig. 7 is a longitudinal sectional view of a further airbag and an airbag system which does not form part of the invention.
Fig. 8 is an exploded perspective view of the airbag and the airbag system of Fig. 7.
Fig. 9 includes side views of a driver's seat of a car equipped with the airbag system of Fig. 7.
Fig. 10 is a longitudinal sectional view of another airbag and an airbag system which does not form part of the invention.
Fig. 11 is a longitudinal sectional view of a further airbag and an airbag system which does not form part of the invention.

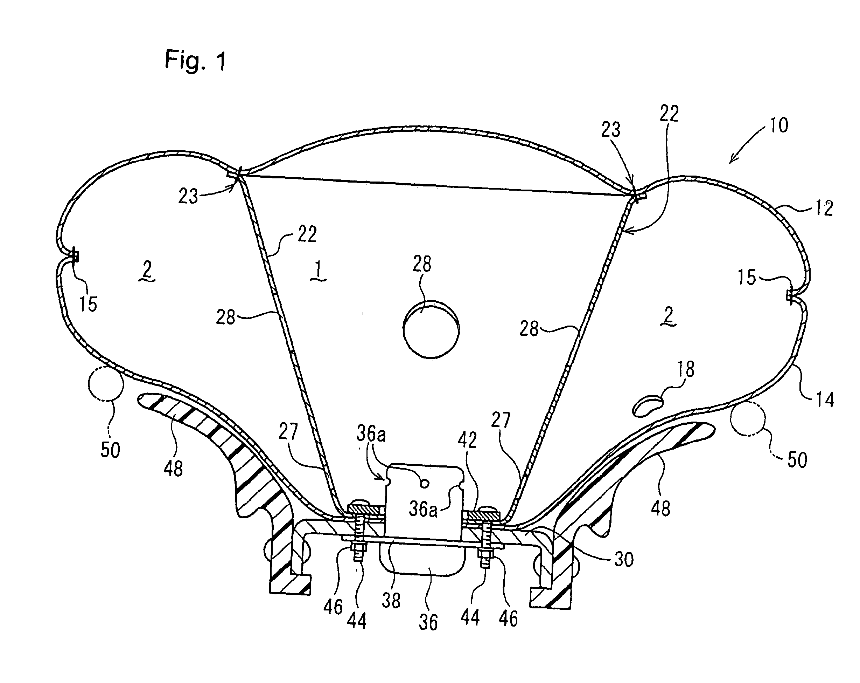

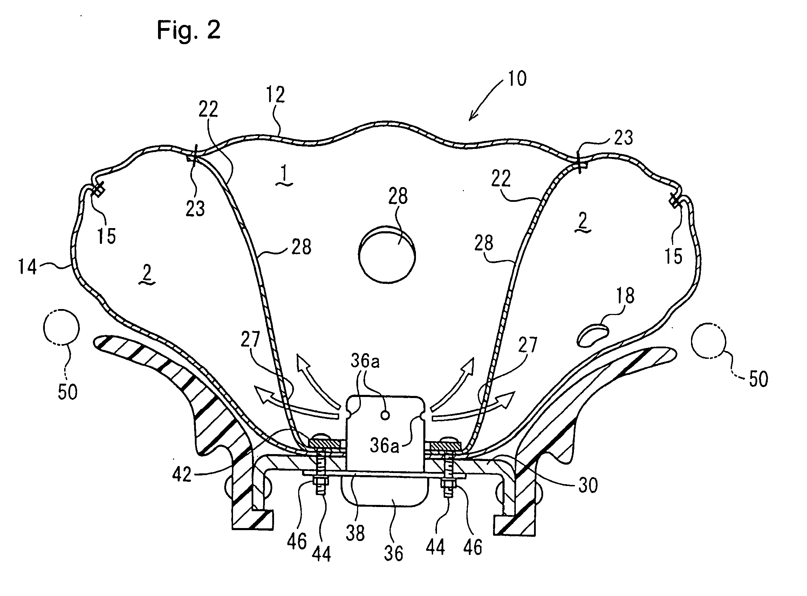

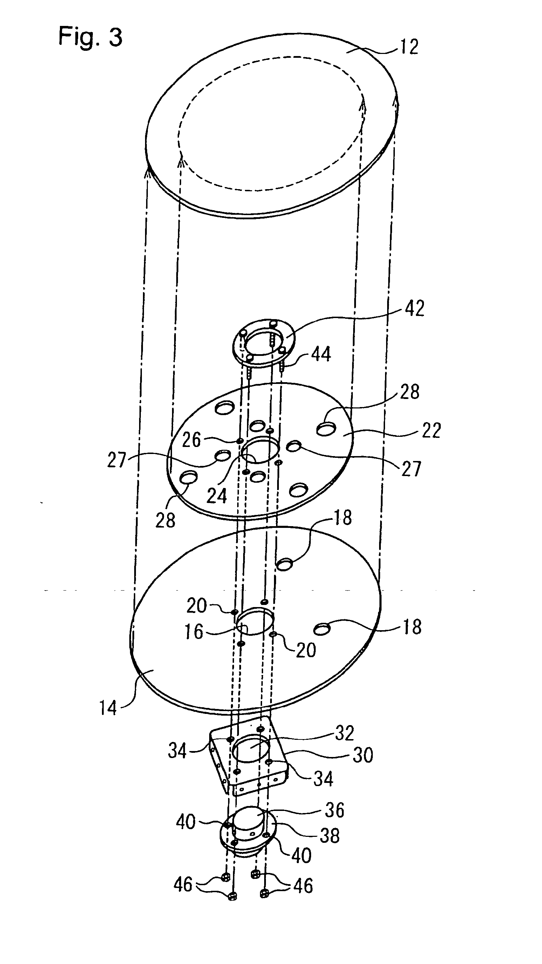

Figs. 1 and 2 are sectional views of a driver-side airbag and a driver-side airbag apparatus according to the embodiment of the present invention, and Fig. 3 is an exploded perspective view of the airbag and the airbag apparatus. Meanwhile, Fig. 1 illustrates the inflated airbag and Fig. 2 illustrates the inflating airbag.

An airbag 10 includes a front panel 12, a rear panel 14, and an inner panel 22, each made from a round-shaped piece of cloth. The front panel 12 and the rear panel 14 have the same diameter and the outer circumferential portions thereof are stitched together with a seam 15 composed of thread or the like so as to shape a bag. This stitched portion has a circular ring shape extending around the outer peripheries of the front panel 12 and the rear panel 14.

The rear panel 14 has an inflator-engaging (a gas-generator-engaging) opening 16 and vent holes 18 formed therein. The inflator-engaging opening 16 is disposed at the central portion of the rear panel 14. The rear panel 14 has bolt through-holes 20 formed around the inflator-engaging opening 16.

The airbag 10 has the inner panel 22 disposed therein. The inner panel 22 is almost concentrically disposed with the front panel 12 and the rear panel 14, and its outer circumferential portion (i.e., the circumferential portion of the front of the inner panel 22 with the airbag 10 being inflated) is stitched together with an intermediate portion lying between the central portion and the circumferential portion of the front panel 12 with a seam 23 composed of thread or the like. This stitched portion has a circular ring shape extending around the outer periphery of the inner panel 22.

The inner panel 22 has an.inflator-engaging opening 24 formed at the central portion thereof (i.e., the rear portion of the inner panel 22 with the airbag 10 being inflated) so as to be substantially concentric with the inflator-engaging opening 16 of the rear panel 14. The openings 16 and 24 have substantially the same diameter. Also, the inner panel 22 has bolt through-holes 26 overlying on the bolt through-holes 20 of the rear panel 14, formed around the opening 24.

The inner panel 22 has inner vent holes 28 formed relatively close to the outer circumference thereof and communication ports 27 formed closer to the inner periphery thereof relative to the inner vent holes 28.

The circumferential portion of the inflator-engaging opening 24 of the inner panel 22 is over laid on the circumferential portion of the inflator-engaging opening 16 of the rear panel 14 and is then overlaid on the circumferential portion of an inflator-fixing opening 32 of a retainer 30. Then, the circumferential portions of the inflator-engaging openings 24 and 16 are fixed to the retainer 30 by inserting blots into the bolt through-holes 26 and 20. With this arrangement, the circumferential portion of the inflator-engaging opening 24 of the inner panel 22 is connected to the circumferential portion of the inflator-engaging opening 16 of the rear panel 14, and the outer circumferential portion of the inner panel 22 is connected to the front panel 12 with the stitched portion (seam) 23.

With this inner panel 22, the inner space of the airbag 10 is partitioned into a central first compartment 1 and a second compartment 2 encircling the first compartment 1. The first compartment 1 lies inside the inner panel 22.

The communication ports 27 are disposed close to the rear of the first compartment 1 (i.e., close to the rear panel 14), and the inner vent holes 28 are disposed close to the front of the first compartment 1 (i.e., close to the front panel 12). The communication ports 27 are formed on the lines extending along the gas-discharge directions of an gas generator 36, which will be described later, disposed in the first compartment 1 so as to extend through the inflator-engaging openings 16 and 24, that is, the communication ports 27 are formed so as to face gas-discharge openings 36a of the gas generator 36.

In this embodiment, as shown in Fig. 3, the four communication ports 27 and the four inner vent holes 28 are both evenly spaced in the circumferential direction of the airbag. Also, the four communication ports 27 and the four inner vent holes 28 are out of phase from each other in the circumferential direction with respect to the center of the airbag.

Meanwhile, the openings 16 and 24, the communication ports 27 and the vent holes 18 and 28 may have reinforcement patches or the like fixed to the respective circumferential portions thereof.

The retainer 30 for having the airbag 10 fixed thereto has the inflator-fixing opening 32 formed at the central portion thereof and also has bolt through-holes 34 formed around the inflator-fixing opening 32.

The gas generator 36 is approximately cylindrical and has the gas-discharge openings 36a formed in the peripheral side surface of the front thereof lying in the axial direction of the cylinder. In this embodiment, the four gas-discharge openings 36a are evenly spaced in the circumferential direction of the gas generator 36. The gas generator 36 is constructed so as to discharge gas in radial directions from the gas discharge openings 36a. The gas generator 36 has an inflator-fixing flange 38 formed in a protruding manner on the peripheral side surface of a middle portion thereof lying (closer to the rear thereof relative to the gas-discharge openings 36a) in the axial direction of the cylinder. The flange 38 has bolt through-holes 40 formed therein. The front of the gas generator 36 is fitted into the inflator-fixing opening 32 of the retainer 30.

In order to fix the airbag 10 to the retainer 30, the circumferential portions of the inflator-engaging openings 16 and 24 of the rear panel 14 and the inner panel 22, respectively, are pressed on the circumferential portion of the inflator-fixing opening 32 of the retainer 30 with a pressure ring 42. The front of the gas generator 36 fitted into the inflator-fixing opening 32 is inserted into the first compartment 1 through the inflator-engaging openings 16 and 24. The gas-discharge openings 36a formed in the front of the gas generator 36 face the corresponding communication ports 27 of the inner panel 22.

In this state, by inserting stud bolts 44 of the pressure ring 42 through the bolt through-holes 26, 20, 34, and 40 and then by screwing nuts 46 onto the tops of the stud bolts 44, the inner panel 22, the airbag 10, and the gas generator 36 are fixed to the retainer 30. Subsequently, by folding the airbag 10 and then fixing a module cover 48 to the retainer 30 so as to cover the folded airbag 10, the airbag apparatus is formed. This airbag apparatus is mounted on a steering wheel of a car (although only a rim 50 of the steering wheel is shown in Figs. 1 and 2).

In a car collision or the like, the gas generator 36 is activated so as to discharge gas into the airbag 10. When inflated with the gas, the airbag 10 pushes out the module cover 48 and then expands in the passenger compartment so as to protect a driver-side passenger.

In the airbag 10, since the communication ports 27 for mutual communication of the first compartment 1 and the second compartment 2 are disposed on the lines extending along the gas-discharge directions of the gas generator 36 disposed in the first compartment 1, that is, the communication ports 27 are disposed so as to face the gas-discharge openings 36a of the gas generator 36, when the gas generator 36 is activated, gas flows from the gas-discharge openings 36a toward the communication ports 27. Thus, as shown in Fig. 2, part of the gas discharged from the gas generator 36 flows through the communication ports 27 and is directly fed to the second compartment 2. With this arrangement, the second compartment 2 inflates at an early stage.

When the passenger runs into the inflated airbag 10, the gas in the first compartment 1 and the second compartment 2 flows out through the inner vent holes 28 and the vent holes 18, respectively; thus a shock is absorbed.

In this embodiment, for example, by making the communication ports 27 slightly smaller so that part of the gas flowing from the gas-discharge openings 36a toward the communication ports 27 strikes the edges of the communication ports 27 and flows into the first compartment 1, the first compartment 1 and the second compartment 2 can be arranged so as to inflate almost simultaneously. In this case, when each of the communication ports 27 has a round shape, the diameter of the communication port 27 may be made smaller. Also, the communication port 27 may have an elliptical shape, a rectangular shape, or the like. In addition, the communication port 27 may have any one of a variety of shapes other than the above-mentioned ones.

The foregoing embodiment is an example of the present invention, and the present invention is not limited to the foregoing embodiment. Although the numbers of the gas discharge openings 36a and the communication ports 27 are respectively set at four in foregoing embodiment by way of example, the numbers are not limited to four. Also, although the communication ports 27 are disposed on the lines extending along the gas-discharge directions of all the gas-discharge openings 36a of the gas generator 36 in the foregoing embodiment, the communication ports 27 may be disposed on the lines extending along the gas-discharge directions of a part of the gas-discharge openings 36a, and the panel portion of the inner panel 22 may lie on the lines extending along the gas-discharge directions of the remaining of the gas-discharge openings 36a.

In the present invention, one or some of the communication ports may be disposed out of the lines extending along the gas-discharge directions of the gas-discharge openings 36a so as not to face any of the gas-discharge openings 36a.

In the present invention, a part of the gas-discharge openings 36a facing the communication ports 27 may be arranged so as to serve as second-compartment gas-discharge openings, and the panel portion of the inner panel 22 may be arranged so as to lie on the lines extending along the remaining of the gas-discharge openings 36a so that the remaining of the gas-discharge openings 36a serve as first-compartment gas-discharge openings. In this case, since the first compartment 1 is mainly inflated with gas flowing from the first-compartment gas-discharge openings and the second compartment 2 is mainly inflated with gas flowing from the second-compartment gas-discharge openings, by adjusting the numbers and the diameters of the first-compartment gas-discharge openings and the second-compartment gas-discharge openings, the first compartment 1 and the second compartment 2 can be inflated almost simultaneously.

Although the forgoing embodiment has been illustrated as an application of the present invention to a driver-side airbag and a driver-side airbag apparatus, the present invention can be applicable to a variety of airbags and airbag apparatuses other than the above-described ones.

As described above, according to the present invention, in an airbag which is partitioned into a first compartment having an inflator disposed therein and a second compartment encircling the first compartment, early inflation of the second compartment can be achieved.

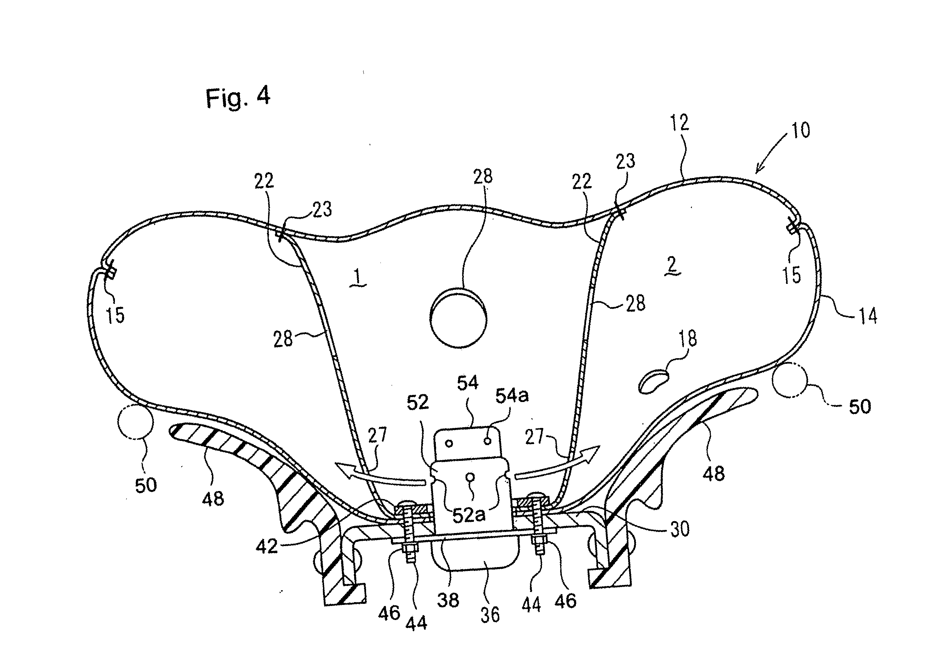

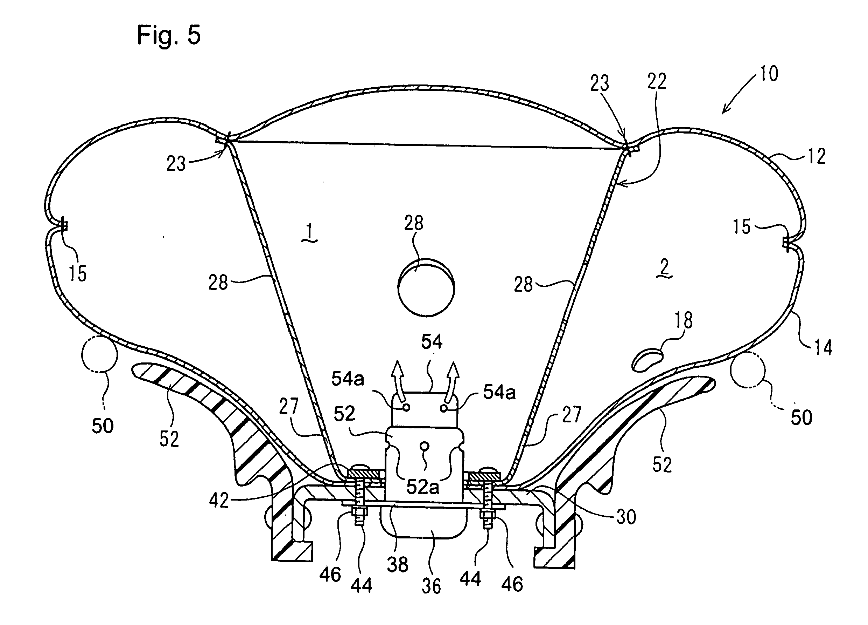

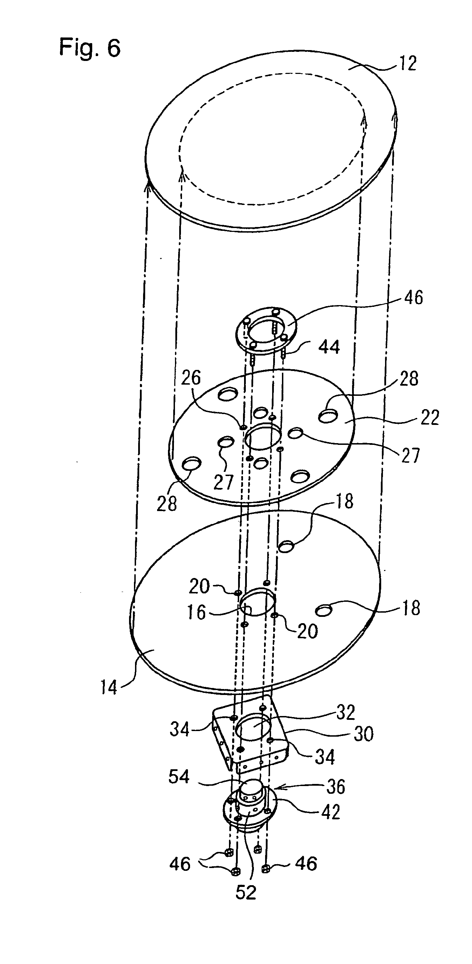

Fig. 4 and Fig. 5 are cross-sectional views of an airbag apparatus for a driver's seat of a motor vehicle according to another embodiment of the present invention, and Fig. 6 is an exploded perspective view of this airbag apparatus. Fig. 4 shows an airbag during deployment, and Fig. 5 shows the airbag after being deployed. Elements having the same function as or are similar to elements shown in Figs. 1-3 are denoted with the same reference numerals.

The general structure of the embodiment shown in Figs. 4 to 6 is the same as the one of the embodiment shown in Figs. 1 to 3, so its description is not repeated here.

The communication port 27 is disposed on the rear end side (on the side of the rear panel 14) of the first chamber 1, and the inner vent hole 28 is disposed on the front end side (on the side of the front panel 12) of the first chamber 1. The communication port 27 is formed at the position opposing a gas injection port 52a of a first gas generating unit 52 of a gas generator 36 described later, which is arranged in the first chamber 1, via the inflator insertion apertures 16, 24.

In this embodiment, as shown in Fig. 6, there are four communication ports 27 and four inner vent holes 28 formed at regular intervals in the circumferential direction of the airbag, respectively. The phases of the communication ports 27 and of the inner vent holes 28 are shifted in the circumferential direction with respect to the center of the airbag.

Patches or the like for reinforcement may be attached to the peripheries of the openings 16, 24, the communication ports 27, and the vent holes 18, 28.

The gas generator 36 is substantially cylindrical in this embodiment. The gas generator 36 is provided at the distal end thereof with the first gas generating unit 52 and a second gas generating unit 54 at axially different positions. The second gas generating unit 54 is disposed on the upper side of the first gas generating unit 52 in Fig. 4 and Fig. 5. The first and the second gas generating units 52, 54 are formed with gas injection ports 52a, 54a respectively on the side peripheral surfaces thereof. In this embodiment, four each of gas injection ports 52a, 54a are formed at regular intervals circumferentially of the gas generator 36. The phases of these injection ports 52a, 54a are shifted axially of the gas generator 36. The gas generating units 52, 54 inject gas in the radial direction from the gas injection ports 52a, 54a.

A flange 38 for fixing the gas generator is projected from the side peripheral surface of the gas generator 36 at the axially midsection (on the rear end side with respect to the gas generating units 52, 54). The flange 38 is formed with bolt insertion holes.

The gas generator 36 is fitted to the inflator mounting port 32 of the retailer 30 at the distal end thereof.

When mounting the airbag 10 to the retainer 30, the peripheries of the inflator insertion apertures 16, 24 of the rear panel 14 and the inner panel 22 are pressed against the periphery of the inflator mounting port 32 of the retainer 30 by a retaining ring 42. The distal end side of the gas generator 36, which is fitted into the inflator mounting port 32, is inserted into the first chamber 1 via the inflator insertion apertures 16, 24. The gas injection ports 52a of the first gas generating unit 38 provided at the distal end of the inflator 36 oppose the respective communication ports 27 of the inner panel 22. On the other hand, the gas injection ports 54a of the second gas generating unit 40 do not oppose the communication port 27, respectively.

In this case, by passing stud bolts 44 of the retaining ring 42 into the bolt insertion holes 26, 20, 34 and tightening nuts 46 on the extremities thereof, the inner panel 22, the airbag 10, and gas generator 36 are fixed to the retainer 30. Then, by folding the airbag 10, and mounting a module cover 48 to the retainer 30 so as to cover the folded body of the airbag 10, the airbag system is constructed. The airbag system is installed in a steering wheel of a vehicle (only a rim portion 50 is shown in Fig. 1 and Fig. 2).

The airbag system is provided with a control unit (not shown) for actuating the gas generator 36 upon detecting a vehicle collision. The control unit includes an adjusting function for adjusting the outputs or the timings of actuation of the first and the second gas generating units 52, 54 of the gas generator 36 individually depending on the weight, the physical constitution, the sitting position (the distance from the steering wheel) and the like of an occupant seated on the driver's seat of the motor vehicle. Though it is not shown, a detecting unit for detecting the weight, the physical constitution, the sitting position (the distance from the steering wheel) and the like of the occupant seated on the driver's seat of the vehicle is mounted to the motor vehicle to which this airbag is installed. The control unit adjusts the outputs or the timings of actuation of the first and the second gas generating units 52, 54 based on the detected output from the detecting unit.

In the airbag system so constructed, in case of a vehicle collision, the gas generator 36 is actuated and gas is injected into the airbag 10. The airbag 10 is deployed by the gas, pushes and opens the module cover 48, and is deployed in the cabin to protect the occupant on the driver's seat.

In the airbag 10, since the communication port 27 for communicating the first compartment 1 and the second compartment 2 opposes the gas injection port 52a of the first gas generating unit 52 of the gas generator 36, which is disposed in the first compartment 1, gas is injected toward the communication port 27 from the gas injection port 52a when the gas generator 36 is actuated. Therefore, gas from the gas generator 36 is supplied directly to the second compartment 2 through the communication port 27, as shown in Fig. 1. Accordingly, the second compartment 2 is deployed early.

In this airbag system, the gas injection port 54a of the second gas generating unit 54 does not oppose the communication port 27, gas from the second gas generating unit 54 is substantially supplied only to the first compartment 1. Therefore, by adjusting the outputs of the first gas generating unit 52 and the second gas generating unit 54 respectively, the internal pressure or the speed of deployment can be adjusted individually for the first compartment 1 and the second compartment 2. In addition, by adjusting the timings of actuation of the first gas generating unit 52 and the second gas generating unit 54, the timings of starting deployment and the timings of completion of deployment of the first compartment 1 and the second compartment 2 may be adjusted.

For example, when the distance between the occupant and the steering wheel is relatively short, or when the weight or the physical constitution of the occupant is relatively small, the output of the second gas generating unit 52 is set to a relatively small value. Accordingly, increase in the internal pressure in the first compartment 1 or the extent of deployment toward the occupant is restrained, so that the occupant is received relatively softly. In such a case as well, since the gas is sufficiently supplied from the first gas generating unit 52 to the second compartment 2, the entire airbag 10 can be deployed sufficiently widely.

On the other hand, when the distance between the occupant and the steering wheel is significantly large, the output of the second gas generating unit 54 is set to a relatively large value, and the output of the first gas generating unit 52 is set to a relatively small value. In such a case, deployment of the airbag 10 toward the sides is restrained and the entire airbag 10 is deployed to a large extent toward the occupant. Accordingly, the occupant can securely be received in a relatively early stage.

In this embodiment, when the occupant crashes the deployed airbag 10, gas in the first compartment 1 and the second compartment 2 flows out through the inner vent hole 28 or the vent hole 18 for absorbing the impact.

The embodiment described above is a further example of the present invention, and the present invention is not limited to the above-described embodiment. For example, though four each of gas injection ports 52a, 54a of the respective gas generating units 52, 54 and the communication ports 27 are provided in the above-described embodiment, they are not limited to four. Though all the gas injection ports 52a of the first gas generating unit 52 oppose the communication port 27 respectively in the embodiment described above, it is also possible that only some of the gas injection ports 52a oppose the communication port 27. It is also possible to provide three or more of gas generating units.

The configuration of the communication port 27 may be a shape other than the shape shown in the drawing. The opening area of the communication port 27 may be selected depending on the internal volume and the like of the second compartment 2, and is not specifically limited.

Although the embodiment described above is an example of application of the present invention to the airbag for the driver's seat and the airbag system for the driver's seat, the present invention may be applied to other airbag systems for various applications.

As described above, in such an airbag divided into a first chamber in which an inflator is disposed and a second chamber surrounding it, early deployment of the second chamber is enabled, and individual adjustment of the internal pressure or the speed of deployment for the first chamber and the second chamber is enabled.

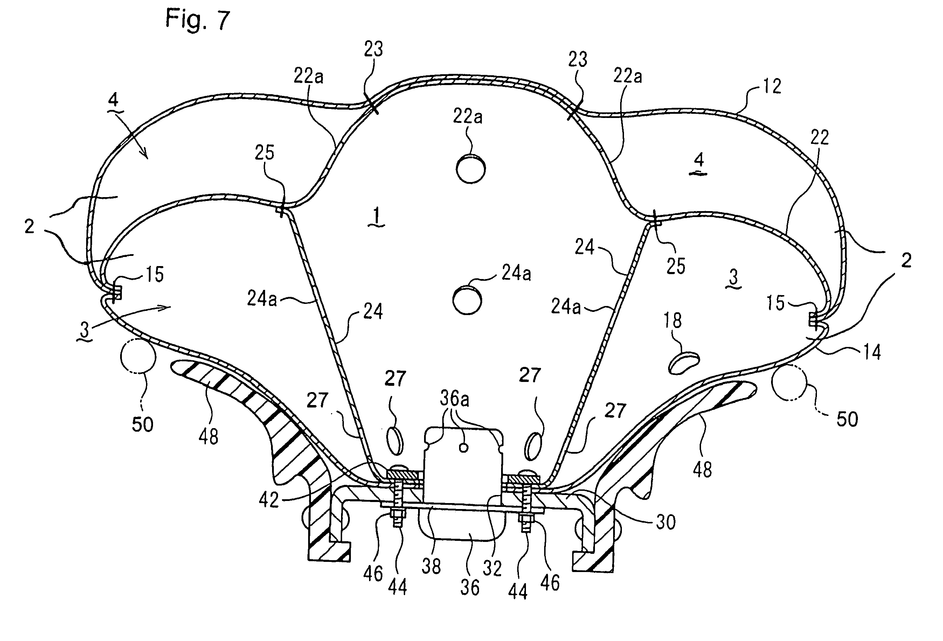

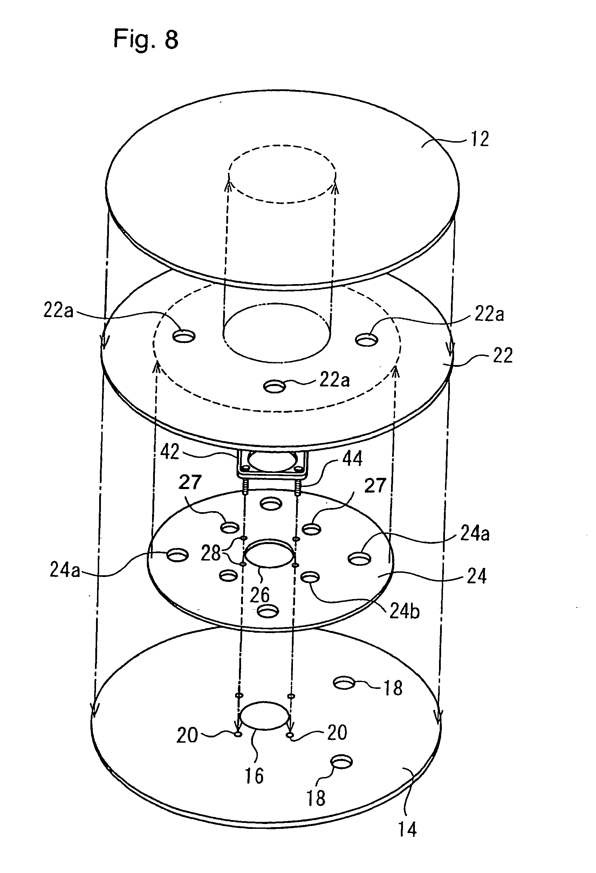

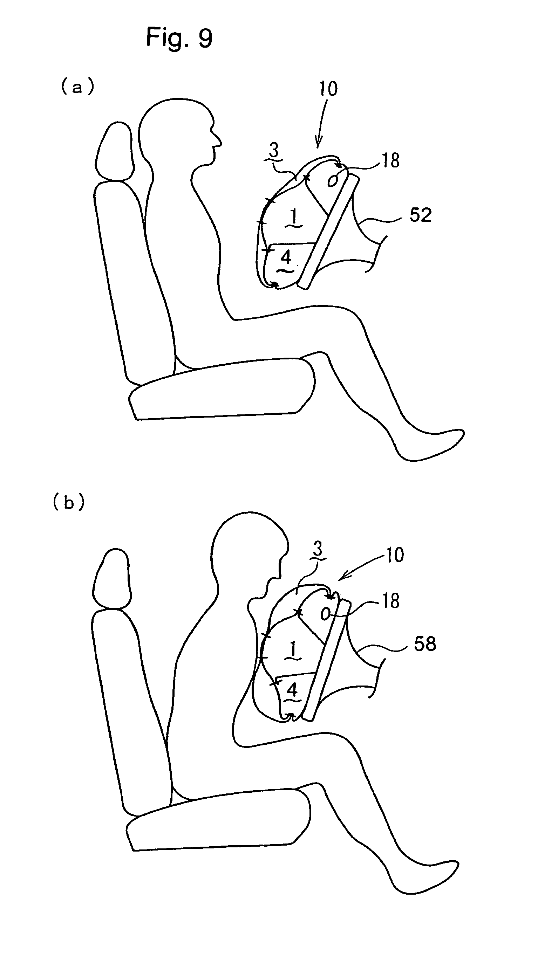

Fig. 7 is a longitudinal sectional view of a further airbag and an airbag system; Fig. 8 is an exploded perspective view of the airbag and the airbag apparatus of Fig. 7; and Fig. 9 is a schematic side view of a driver's seat equipped with the airbag apparatus. Fig. 7 shows a fully inflated airbag; Fig. 9(a) shows an airbag halfway through inflation; and Fig. 9(b) shows when an occupant strikes against the fully inflated airbag.

In the airbag systems described hereafter, the purpose of the communication ports 27 which are aligned with openings of the gas generator 36 is the same as described above with reference to Figs. 1-6 and is not repeated.

The airbag 10 includes a front panel 12, a rear panel 14, a first inner panel 22, and a second inner panel 24, which are each made of a circular woven fabric. The outer peripheries of the front panel 12 and the rear panel 14 are stitched together with a seam 15 made of thread or the like into a bag form. The stitched section is shaped like a ring around the outer peripheries of the front panel 12 and the rear panel 14.

The rear panel 14 has an inflator or gas-generator-engaging opening 16 and vent holes 18. The gas-generator-engaging opening 16 is arranged in the center of the rear panel 14. Bolt insertion holes 20 are provided around the gas-generator-engaging opening 16. The vent holes 18 are arranged relatively close to the outer periphery of the rear panel 14.

A first inner panel 22 and the second inner panel 24 are provided in the airbag 10. The first inner panel 22 is centered at an identical point to the front panel 12 and the rear panel 14, the outer periphery of the first inner panel 22 being superposed on the outer peripheries of the front panel 12 and the rear panel 14 and stitched together with the seam 15. The center of the first inner panel 22 is stitched to the center of the front panel 12 with a seam 23 made of thread or the like. The stitched section with the seam 23 is shaped like a ring concentrically arranged about the centers of the front panel 12 and the rear panel 14.

The first inner panel 22 has communication holes 22a relatively adjacent to the outer periphery thereof.

The second inner panel 24 is centered at an identical point to the first inner panel 22 and the rear panel 14 therebetween, the outer peripheries of which are stitched to the first inner panel 22 with a seam 25 made of thread or the like at the center between the stitched section with the seam 23 and the communication holes 22a. The stitched section with the seam 25 is shaped like a ring around the outer periphery of the second inner panel 24. The second inner panel 24 has an opening 26 at the center of the second inner panel 24, the opening 26 being arranged concentrically with the gas-generator-engaging opening 16 of the rear panel 14. Bolt insertion holes 28 that overlap with the bolt insertion holes 20 of the rear panel 14 are provided around the opening 26.

The second inner panel 24 has communication holes 24a relatively adjacent to the periphery thereof and communication ports 27 adjacent to the center.

The periphery of the gas-generator-engaging opening 26 of the second inner panel 24 is overlapped with the periphery of the gas-generating-engaging opening 16 of the rear panel 14 and the periphery of an inflator-mounting hole 32 of a retainer 30. The peripheries of the gas-generator-engaging openings 26 and 16 are secured to the retainer 30 through the bolt insertion holes 28 and 20. Thus, the periphery of the gas-generator-engaging opening 26 of the second inner panel 24 is connected to the periphery of the gas-generator-engaging opening 16 of the rear panel 14.

The first inner panel 22 and the second inner panel 24 partition the interior of the airbag 10 into a central compartment 1, an outer-peripheral front chamber 4 arranged on the outer periphery of the central compartment 1 adjacent to the front (near the front panel 12), and an outer-peripheral rear chamber 3 arranged on the outer periphery of the central compartment 1 adjacent to the rear (near the rear panel 14). Front chamber 4 and rear chamber 3 correspond to the second compartment 2 of Figs. 1-6, while the central compartment 1 corresponds to the first compartment 1 of Figs. 1-6.

Specifically, the central compartment 1 is a space inside the second inner panel 24 and faces the respective gas-generator-engaging openings 26 and 16 of the second inner panel 24 and the rear panel 14. The outer-peripheral front chamber 4 is a space between the front panel 12 and the first inner panel 22, which is partitioned by the seams 15 and 23. The outer-peripheral rear chamber 3 is a space surrounded by the second inner panel 24, the first inner panel 22, and the rear panel 14 on the outside of the second inner panel 24.

The central compartment 1 communicates directly with both the outer-peripheral front chamber 4 and the outer-peripheral rear chamber 3 through the communication holes 22a and 24a. The outer-peripheral front chamber 4 and the outer-peripheral rear chamber 3 communicate with each other through the communication holes 22a and 24a only via the central compartment 1. The outer-peripheral rear chamber 3 communicates with the exterior of the airbag 10 through the vent holes 18.

The airbag has four communication holes 22a and 24a each, which are spaced evenly along the circumference of the airbag 10, as shown in Fig. 2. The airbag has also four communication ports 27. The communication ports 27 and the communication holes 24a are out of circumferential phase with respect to the center of the airbag 10. The communication ports 27 are formed on the extension of the direction of the jet of gas from a gas generator 36 (which will be described later), or in the position opposed to gas ports 36a of the gas generator 36.

The peripheries of the openings 16 and 26, the communication holes 22a and 24a, and the communication ports 27 may have a reinforcing patch (not shown) around the peripheries.

The retainer 30 for mounting the airbag 10 has the gas generator-mounting hole 32 at the center and bolt insertion holes (not shown) therearound.

The gas generator 36 is substantially cylindrical and has the gas ports 36a around the peripheral side surface of the axial end thereof. The airbag has four gas ports 36a spaced evenly along the circumference of the gas generator 36. The gas generator 36 is constructed to jet a gas radially from the gas ports 36a. A flange 38 for fastening the gas generator 36 projects from the peripheral side surface in the axial middle of the gas generator 36 (closer to the rear than the gas ports 36a). The flange 38 has bolt insertion holes (not shown). The end of the gas generator 36 is fitted in the gas generator-mounting hole 32 of the retainer 30.

When mounting the airbag 10 to the retainer 30, the peripheries of the respective gas-generator-engaging openings 16 and 26 of the rear panel 14 and the second inner panel 24 are pressed to the periphery of the gas generator-mounting hole 32 of the retainer 30 with a ferrule 42 for holding. The end of the gas generator 36 fitted in the gas generator-mounting hole 32 is inserted into the central compartment 1 through the gas-generator-engaging openings 16 and 26. The gas ports 36a at the end of the gas generator 36 are opposed to the communication ports 27 of the second inner panel 24.

At that time, stud bolts 44 of the ferrule 42 are inserted into the respective bolt insertion holes 28 and 20 of the rear panel 14 and the second inner panel 24 and the bolt insertion holes of the retainer 30 and the flange 38, on the ends of which nuts 46 are fastened, thereby fixing the first inner panel 22, the airbag 10, and the gas generator 36 to the retainer 30. The airbag 10 is folded and a module cover 48 is mounted to the retainer 30 so as to cover the folded airbag 10; thus, the airbag system is formed. The airbag system is mounted to a steering wheel 58 of a car (only a rim 54 is shown in Fig. 7).

In the airbag system with such a structure, the gas generator 36 is activated to jet a gas into the airbag 10 in a car crash. The airbag 10 is inflated by the gas to force open the module cover 48 into the interior of the car, thereby protecting a driver's seat occupant.

With the airbag 10, the gas from the gas generator 36 is supplied into the central compartment 1 to inflate it. The gas then flows into the outer-peripheral front chamber 4 and the outer-peripheral rear chamber 3 through the communication holes 22a and 24a, respectively, to inflate them.

In this airbag system, the second inner panel 24 for partitioning the central chamber 1 and the outer-peripheral rear chamber 3 from each other has the communication ports 27 on the extension of the direction of the jet of gas from the gas generator 36, or in the position opposed to the gas ports 36a of the gas generator 36. Therefore, when the inflator 36 is activated, the gas is discharged from the gas ports 36a toward the communication ports 27 and directly supplied also to the outer-peripheral rear chamber 3 through the communication ports 27. Therefore, the outer-peripheral rear chamber 3 is inflated sideward substantially at the same time as the central compartment 1, as shown in Fig. 3(a). Consequently, the airbag 10 is allowed to receive an occupant early also by the outer periphery.

When an occupant has struck against the inflated airbag 10, the gas in the airbag 10 flows out through the vent holes 18 to the exterior of the airbag 10 to absorb the impact. At that time, since the outer-peripheral front chamber 4 does not communicate directly with the outer-peripheral rear chamber 3 which faces the vent holes 18, the gas in the outer-peripheral front chamber 4 flows out through the vent holes 18 via the central compartment 1 and the outer-peripheral rear chamber 3. Accordingly, the airbag 10 holds the gas in the outer-peripheral front chamber 4 for a relatively long time; thus, the outer periphery of the airbag 10 can sufficiently absorb the impact of the occupant even with a low-output gas generator 36.

According to this airbag system, the center of first inner panel 22 is stitched to the center of the front panel 12 and the periphery of the gas-generator-engaging opening 26 of the second inner panel 24 is joined to the gas-generator-engaging opening 16 of the rear panel 14 with the ferrule 42; thus, the central compartment 1 extends from the rear to the front of the airbag 10. Therefore, the central compartment 1 is first inflated by the gas from the gas generator 36, so that the center of the airbag 10 is inflated early. The outer-peripheral front chamber 2 and the outer-peripheral rear chamber 3 are inflated laterally from the early inflated central compartment 1, which allows also the outer periphery of the airbag 10 to receive the occupant early.

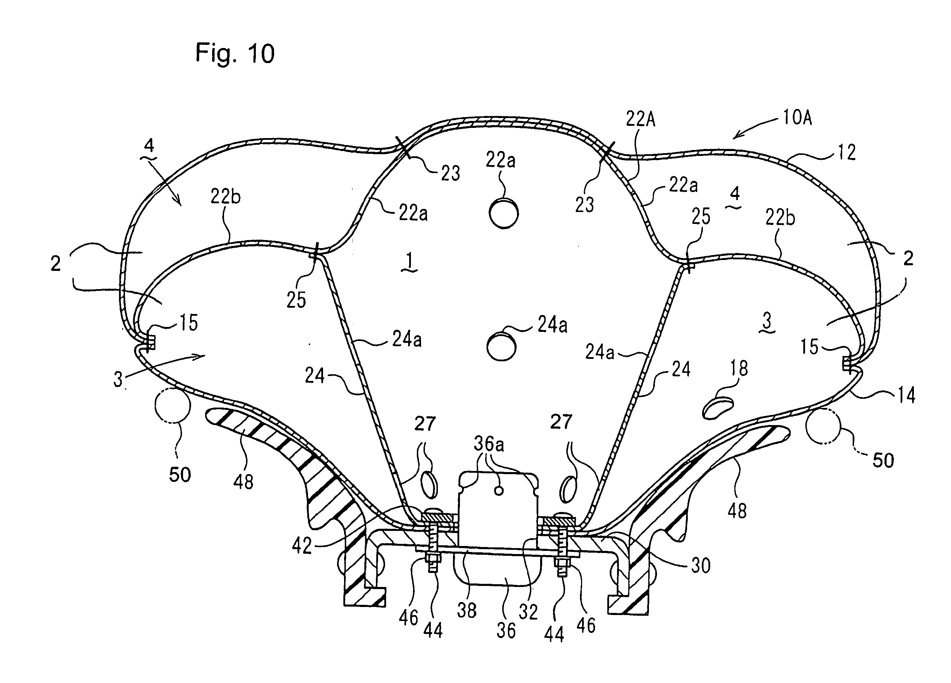

Fig. 10 is a longitudinal sectional view of another airbag and an airbag system.

Also in this airbag system, an airbag 10A whose shell is made up of the front panel 12 and the rear panel 14 is partitioned into the central compartment 1 facing the inflator openings of the second inner panel 24 and the rear panel 14, the outer-peripheral front chamber 4 arranged on the outer periphery of the central compartment 1 adjacent to the front, and the outer-peripheral rear chamber 3 arranged on the outer periphery of the central chamber 1 adjacent to the rear by a first inner panel 22A and the second inner panel 24.

The central compartment 1 and the outer-peripheral front chamber 4 are partitioned by the first inner panel 22A; the central compartment 1 and the outer-peripheral rear chamber 3 are partitioned by the second inner panel 24; and the outer-peripheral front chamber 4 and the outer-peripheral rear chamber 3 are partitioned by the first inner panel 22A. The central compartment 1 communicates directly with both the outer-peripheral front chamber 4 and the outer-peripheral rear chamber 3 through the communication holes 22a and 24a, respectively. The outer-peripheral rear chamber 3 communicates with the exterior of the airbag 10A through the vent holes 18.

In this airbag system, the first inner panel 22A for partitioning the outer-peripheral front chamber 4 and the outer-peripheral rear chamber 3 from each other has communication holes 22b that communicate the outer-peripheral front chamber 2 and the outer-peripheral rear chamber 3 with each other.

Since other arrangements of the airbag 10A are the same as those of the airbag 10 of Figs. 7 to 9, a description thereof will be omitted here by giving the same numerals to the same elements of Fig. 10 as those of Figs. 7 to 9.

Also in an airbag system of Fig. 10 having the airbag 10A, when the gas generator 36 arranged in the central compartment 1 through the inflator openings of the rear panel 14 and the second inner panel 24 is activated, the gas from the gas generator 36 first inflates the central compartment 1, and flows into the outer-peripheral front chamber 4 and the outer-peripheral rear chamber 3 through the communication holes 22a and 24a, respectively to inflate the outer-peripheral front chamber 4 and the outer-peripheral rear chamber 3. The outer-peripheral front chamber 4 does not directly face the vent holes 18; and thus, the gas in the outer-peripheral front chamber 4 flows out through the vent holes 18 to the exterior of the airbag 10A via the outer-peripheral rear chamber 3 or the central compartment 1 and the outer-peripheral rear chamber 3.

Accordingly, even with the airbag 10A, the gas is held in the outer-peripheral front chamber 2 longer than that of the conventional one; thus, the impact of the occupant can be sufficiently absorbed by the outer periphery of the airbag 10A even with the gas generator 36 having a relatively low capacity.

In this airbag system, the communication holes 22b for communicating the outer-peripheral front chamber 4 with the outer-peripheral rear chamber 3 may be closed by a closing member such as a breakable film that is broken to open the communication holes 22b when the inner pressure in the outer-peripheral front chamber 4 has reached a predetermined value or more.

With such an arrangement, when the inner pressure in the outer-peripheral front chamber 4 is lower than the predetermined pressure, the gas outflow from the outer-peripheral front chamber 4 can be controlled to hold the inner pressure in the outer-peripheral front chamber 4 for a long time. Also when the occupant collides strongly with the inflated airbag 10A to increase the inner pressure in the outer-peripheral front chamber 4 to the predetermined value or more, the closing member opens the communication holes 22b to promote the outflow of the gas in the outer-peripheral front chamber 4. This increases the rate of absorption of the impact.

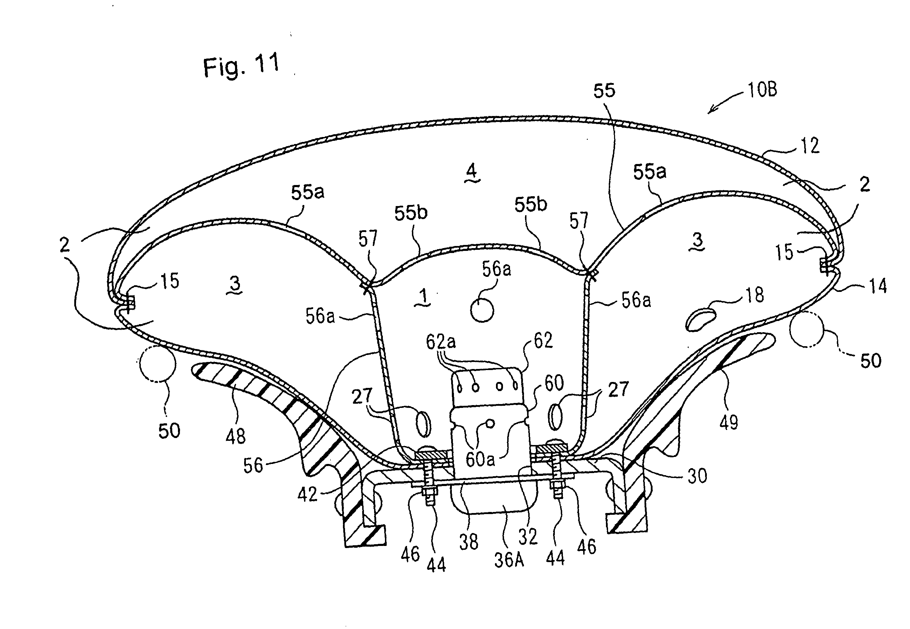

Fig. 11 is a longitudinal sectional view of a further airbag and an airbag system.

Also in this airbag system, an airbag 10B includes the front panel 12, the rear panel 14, a first inner panel 55, and a second inner panel 56, which are each made of a circular woven fabric. The outer peripheries of the front panel 12 and the rear panel 14 are stitched together with the seam 15 made of thread or the like into a bag form. The rear panel 14 has a gas-generator-engaging opening (its numeral is omitted) and vent holes 18. The gas-generator-engaging opening is arranged in the center of the rear panel 14. The vent holes 18 are arranged relatively adjacent to the outer periphery of the rear panel 14.

The first inner panel 55 and the second inner panel 56 are provided in the airbag 10B. The first inner panel 55 is centered at an identical point to the front panel 12 and the rear panel 14, the outer periphery of the first inner panel 55 being superposed on the outer peripheries of the front panel 12 and the rear panel 14 and stitched together with the seam 15. The first inner panel 55 has communication holes 55a relatively adjacent to the outer periphery thereof and other communication holes 55b adjacent to the center.

The second inner panel 56 is centered at an identical point to the first inner panel 55 and the rear panel 14 therebetween, the outer peripheries of the second inner panel 56 being stitched to the first inner panel 55 with a seam 57 made of thread or the like at the center between the communication holes 55a and the communication holes 55b. The stitched section with the seam 57 is shaped like a ring around the outer periphery of the second inner panel 56. The second inner panel 56 has an inflator opening (its numeral is omitted) at the center, which is arranged concentrically with the inflator opening of the rear panel 14.

The second inner panel 56 has communication holes 56a relatively adjacent to the periphery thereof and communication ports 27 adjacent to the center.

The periphery of the inflator opening of the second inner panel 56 is overlapped with the periphery of the inflator opening of the rear panel 14 and is overlapped with the periphery of the gas generator-mounting hole 32 of the retainer 30, thus being fixed to the retainer 30. Thus, the periphery of the inflator opening of the second inner panel 56 is connected to the periphery of the inflator opening of the rear panel 14.

The first inner panel 55 and the second inner panel 56 partition the interior of the airbag 10B into a central rear compartment 1 corresponding to the central compartment of the previously described embodiments, a front chamber 4 arranged on the front of the airbag 10B (adjacent to the front panel 12), and an outer peripheral rear chamber 3 arranged on the outer periphery of the central rear compartment 1. In contrast to the above described embodiments of Fig. 7-10, the front chamber 4 now covers the central compartment 1.

Specifically, the central rear compartment 1 is a space inside the second inner panel 56, which is arranged at the center of the airbag 10B adjacent to the rear and faces the gas-generator-engaging openings of the second inner panel 56 and the rear panel 14. The outer-peripheral front chamber 4 is a space between the front panel 12 and the first inner panel 54, which is arranged on the front of the airbag 10B. The front chamber 4 of this airbag system occupies substantially the whole of the front of the airbag 10B. The outer-peripheral rear chamber 3 is a space surrounded by the second inner panel 56, the first inner panel 55, and the rear panel 14 on the outside of the second inner panel 56, which is arranged on the outer periphery of the central rear compartment 1.

The central rear compartment 1 communicates directly with both of the front chamber 4 and the outer peripheral rear chamber 3 through the communication holes 54b and 56a. The front chamber 4 and the outer peripheral rear chamber 3 also communicate with each other through the communication holes 54a. In other words, the central rear compartment 1, the front chamber 4, and the outer peripheral rear chamber 3 communicate with one another through the communication holes 54a, 54b, and 56a. The outer peripheral rear chamber 3 communicates with the exterior of the airbag 10B through the vent holes 18.

The airbag also has four communication holes 54a, 54b, and 56a each, which are spaced evenly along the circumference of the airbag 10Bs. The airbag has also four communication ports 27 spaced evenly along the circumference of the airbag 10B. The communication ports 27 and the communication holes 56a are out of circumferential phase with respect to the center of the airbag 10B. The communication ports 27 are formed on the extension of the direction of the jet of gas from a first gas generator unit 60 of a gas generator 36A (which will be described later) arranged in the central rear compartment 1 through the gas-generator-engaging opening, or in the position opposed to gas ports 60a of the first gas generator unit 60.

The gas generator 36A of the airbag system is substantially cylindrical and has the first gas generator unit 60 and a second gas generator unit 62 at the end thereof in axially different positions. The first gas generator unit 60 is arranged at the lower stage and the second gas generator unit 62 is arranged at the upper stage in Fig. 11. The first gas generator unit 60 and the second gas generator unit 62 have gas ports 60a and 62a in the peripheral side surfaces, respectively. The gas generators 60 and 62 emit gas radially through the gas ports 60a and 62a, respectively.

The gas ports 60a and 62a are each spaced evenly along the circumference of the inflator 36A. The number of the gas ports 60a of the first gas generator 60 is the same (four) as that of the communication ports 27. The gas ports 60a and 62a are out of phase with respect to the axis of the gas generator 36A so that the directions of the jet of gas therefrom are not the same.

The flange 38 for fastening the gas generator 36A projects from the peripheral side surface in the axial middle of the gas generator 36A (on the rear of the first gas generator unit 60).

The end of the gas generator 36A (the first and second gas generator units 60 and 62) is fitted in the gas generator-mounting hole 32 of the retainer 30, and the peripheries of the respective gas-generator-engaging openings of the rear panel 14 and the second inner panel 56 of the airbag 10B are pressed to the periphery of the gas generator-mounting hole 32 of the retainer 30 with the ferrule 42 for holding. The end of the gas generator 36A fitted in the gas generator-mounting hole 32 is inserted into the central rear chamber 4 through the gas generator openings. The gas ports 60a of the first gas generator unit 60 of the gas generator 36A are opposed to the communication ports 27 of the second inner panel 56.

The stud bolts 44 of the ferrule 42 are inserted into the respective bolt insertion holes (not shown) of the rear panel 14, the second inner panel 56, the retainer 30, and the flange 38, on the ends of which the nuts 46 are fastened, thereby fixing the second inner panel 56, the airbag 10B, and the gas generator 36A to the retainer 30. The airbag 10B is folded, and the module cover 48 is mounted to the retainer 30 so as to cover the folded airbag 10B; thus, the airbag apparatus is formed. The airbag apparatus is also mounted to the steering wheel 58 of a car (only the rim 50 is shown in Fig. 5).

In this airbag system, the airbag system is equipped with a controller (not shown) having the function of operating the first and second gas generator units 60 and 62 of the gas generator 36A at different timings and controlling the operating output of the first and second gas generator units 60 and 62 of the gas generator 36A depending on the weight, the physique, and the seating position (the distance from the steering wheel 58) of the driver's seat occupant. The vehicle equipped with the airbag system has a sensor (not shown) for sensing the weight, the physique, and the seating position of the driver's seat occupant. The controller controls the output from the first and second gas generator units 60 and 62 on the basis of the values sensed at the sensing position.

In the airbag system, the first gas generator unit 60 of the gas generator 36A is activated in a car crash. The gas from the first gas generator unit 60 is supplied to the central rear compartment 1 to inflate it first. The gas then flows into the front chamber 4 and the outer peripheral rear chamber 3 through the communication holes 54b and 56a to inflate them.

With this airbag system, the second inner panel 56 for partitioning the central rear compartment 1 and the outer peripheral rear chamber 3 from each other has the communication ports 27 on the extension of the direction of the jet of gas from the first gas generator unit 60, or in the position opposed to the gas ports 60a of the gas generator 36A. Therefore, when the gas generator 36A is activated, the gas is discharged from the gas ports 60a of the first gas generator unit 60 toward the communication ports 27 and directly supplied also to the outer peripheral rear chamber 3 through the communication ports 27. Therefore, the outer peripheral rear chamber 3 is inflated sideward substantially at the same time as the central rear compartment 1. Consequently, the airbag 10B is allowed to receive an occupant early also by the outer periphery.

After the first gas generator unit 60 has started to operate, the second gas generator unit 62 is activated after a predetermined time to supply gas into the central rear compartment 1, the front chamber 4, and the outer peripheral rear chamber 3, thereby sufficiently inflating the airbag 10B also along the thickness.

When an occupant has struck against the inflated airbag 10B, the gas in the airbag 10B flows out through the vent holes 18 to the exterior of the airbag 10B to absorb the impact. At that time, since the front chamber 4 does not directly face the vent holes 18, the gas in the front chamber 4 flows out through the vent holes 18 to the exterior of the airbag 10B via the outer peripheral rear chamber 3 or the central rear compartment 1 and the outer peripheral rear chamber 3. Accordingly, the gas is held in the front chamber 4 for a relatively long time as compared with the conventional one.

With the airbag system, after the first gas generator unit 60 has started to operate, the second gas generator unit 62 is activated after a predetermined time, thus continuing to supply gas to the airbag 10B for a relatively long time. Consequently, the inner pressure in the airbag 10B is maintained high over a long time.

According to this airbag system, the front chamber 4 of the airbag 10B occupies substantially the whole of the front of the airbag 10B. Thus, the inner pressure of substantially the whole of the front of the airbag 10B is maintained high for a long time.

With the airbag system, the controller is capable of controlling the output of the first and second gas generator units 60 and 62 during operation. For example, when the distance between the occupant and the steering wheel is relatively small and when the weight or the physique of the occupant is relatively small, the output of the second gas generator unit 62 is set lower. This restrains the inflation of the airbag 10B toward the occupant, thus allowing the occupant to be received relatively softly. Even with such an arrangement, the gas can be sufficiently supplied to the outer peripheral rear chamber 3 from the first gas generator unit 60; thus, the entire airbag 10B can be inflated sufficiently into a wire area.

When the distance between the occupant and the steering wheel is very large, the output from the second gas generator unit 62 is set higher and the output from the first gas generator unit 60 is set lower. With such an arrangement, the sideward inflation of the airbag 10B is restrained, and so the entire airbag 10B is greatly inflated toward the occupant. This allows the occupant to be securely received relatively early.

Although a multistage gas generator is used in Fig. 11, a single-stage gas generator may be used (for example, denoted by numeral 36).

The above-described embodiments are only examples of the invention and the invention is not limited to those. For example, the above embodiments include four gas ports, communication holes, and communication ports each. The number, however, is not limited to four. The shapes of the communication holes and the ports may be other than those shown in the drawing. The open areas of the communication holes and the ports are not particularly limited.

The gas generator may include more than two gas generator units.

While the above embodiments are examples of application of the invention to a driver's seat airbag and a driver's seat airbag system, the invention can also be applied to other airbags and airbag systems of various uses. Furthermore, it should be noted that the principle underlying the embodiments shown in Figs. 7-11, namely that the front chamber does not face the vent holes directly, may be also employed in an airbag without communication ports directly facing gas ports of a gas generator.

As described above, the invention also provides an airbag and an airbag system capable of maintaining high inner pressure for a relatively long time even with a low-capacity inflator.

## Claims

1. An airbag (10; 10A; 10B) having a gas-generator-engaging opening (16) for supplying gas in a rear portion and facing an occupant in inflation on a front portion thereof,
wherein the interior of the airbag (10A; 10B) is partitioned into a central first compartment (1) facing the opening and a second compartment (2; 3; 4) encircling the first compartment (1)
wherein at least one communication port (27) connecting the first compartment (1) and the second compartment (2; 3; 4) lies on a substantially horizontal line extending from a corresponding gas-discharge opening (36a; 52a; 60a) of a gas generator (36; 36A) so as to face the gas-discharge opening (36a; 52a; 60a) when the airbag is being inflated,
**characterized in that**
the airbag comprises a single inner panel (22) for partitioning the inner space of the airbag (10) into the central first compartment (1) and the second compartment (2) encircling the first compartment (1).

2. The airbag (10) according to claim 1,
wherein the front portion is formed by a front panel (12) disposed close to a passenger and the rear portion is formed by a rear panel (14) disposed remote from the passenger, the circumferential portions of the front panel (12) and the rear panel (14) being bonded to each other, and
wherein the rear panel (14) has a gas-generator-engaging opening formed at the central part thereof.

3. The airbag (10) according to claim 1 or claim 2,
wherein the inner panel (22) has an opening formed at the central part thereof so as to be almost concentric with the gas-generator-engaging opening (16),
wherein the front circumferential portion of the inner panel (22) is bonded to an intermediate portion lying between the central portion and the circumferential portion of a front panel (12),
wherein the inner panel (22) has the at least one communication port (27) formed close to the rear thereof.

4. The airbag (10; 10A; 10B) according to any one of claims 1 to 3, wherein the rear portion has at least one vent hole (18) formed therein, and at least one inner vent hole (28) is provided for mutual communication of the first compartment (1) and the second compartment (2; 3; 4).

5. The airbag (10) according to any one of claims 1 to 4,
wherein the second compartment (2) is divided into an outer-peripheral front chamber (4) arranged on the outer periphery of the first compartment (1) adjacent to the front, and an outer-peripheral rear chamber (3) arranged on the outer periphery of the first compartment (1) adjacent to the rear;
the outer-peripheral rear chamber (3) communicates with the exterior of the airbag (10) through vent holes (18);
the first compartment (1) communicates directly with the outer-peripheral front chamber (4) and the outer-peripheral rear chamber (3), the at least one communication port (27) connecting the first compartment (1) with the outer-peripheral rear chamber (3),
the outer-peripheral front chamber (4) and the outer-peripheral rear chamber (3) communicate with each other only via the first compartment (1); and
the gas for inflating the airbag (10) flows from the first compartment (1) into the outer-peripheral front chamber (4) and the outer-peripheral rear chamber (3).

6. The airbag (10A; 10B) according to any one of claims 1 to 4,
wherein the second compartment (2) is divided into
an outer-peripheral front chamber (4) arranged on the outer periphery of the first compartment (1) adjacent to the front, and an outer-peripheral rear chamber (3) arranged on the outer periphery of the first compartment (1) adjacent to the rear;
the outer-peripheral rear chamber (3) communicates with the exterior of the airbag (10A; 10B) through vent holes (18);
the first compartment (1) communicates directly with the outer-peripheral front chamber (4) and the outer-peripheral rear chamber (3), the at least one communication port (27) connecting the first compartment (1) with the outer-peripheral rear chamber (3),
the outer-peripheral front chamber (4) and the outer-peripheral rear chamber (3) communicate directly with each other; and
the gas for inflating the airbag (10A; 10B) flows from the first compartment (1) into the outer-peripheral front chamber (4) and the outer-peripheral rear chamber (3).

7. The airbag (10; 10A; 10B) according to claim 5 or claim 6, wherein the first compartment (1) is arranged to reach from the rear to the front of the airbag (10; 10A; 10B) during inflation.

8. An airbag apparatus comprising an airbag (10; 10A; 10B) according to any one of claims 1 to 7 and a gas generator (36; 36A) having at least one gas-discharge opening (36a; 52a; 60a),
wherein at least the front of the gas generator (36; 36A) is disposed in the airbag (10; 10A; 10B) and the gas-discharge opening (36a; 52a; 60a) is disposed in the airbag (10; 10A; 10B).

9. The airbag apparatus according to claim 8,
wherein the number of said at least one gas-discharge opening (36a; 52a; 60a; 54a; 62a) and said at least one communication port (27) is plural,
wherein each of said communication ports (27) is disposed on a substantially horizontal line extending from a corresponding one of said gas-discharge openings (36a; 52a; 60a) so as to face the gas-discharge opening (36a; 52a; 60a) when the airbag is being inflated,
wherein no opening connecting the first compartment (1) and the second compartment (2) lies on substantially horizontal lines extending from the remaining gas-discharge openings (54a; 62a).

10. The airbag apparatus according to claim 8 or 9,
wherein the first compartment (1) and the second compartment (2) inflate almost simultaneously when the gas generator (36; 36A) is activated.

11. An airbag apparatus according to any one of claims 8-10,
**characterized in that** the gas generator (36; 36A) includes a plurality of, at least first (52; 60) and second (54; 62), gas generating units, the gas generating units (52, 54; 60, 62) each include a gas discharge opening (52a, 54a; 60a, 62a), the at least one communication port (27) opposes the gas discharge opening (52a; 60a) of the first gas generating unit (52; 60) and the gas discharge opening (54a; 62a) of the gas generating unit (54; 62) other than the first gas generating unit (52; 60) does not oppose the at least one communication port (27) in a state in which the airbag (10; 10A; 10B) is deployed.

12. An airbag apparatus comprising an airbag (10; 10A; 10B) and a gas generator (36; 36A) for inflating the airbag (10; 10A; 10B), wherein
the airbag (10; 10A; 10B) is an airbag as defined in any one of claims 1 to 7; and
gas from the gas generator (36; 36A) is supplied to the first compartment (1).

13. An airbag apparatus comprising:
an airbag (10; 10A; 10B) according to any one of claims 5 to 7,
a gas generator (36; 36A) including a plurality of gas generating units (52, 54; 60, 62) with different gas-generation timings.

14. An airbag apparatus according to claim 13, wherein the front chamber (4) of the airbag (10B) occupies substantially the whole of the front of the airbag (10B).

## Patentansprüche

1. Airbag (10; 10A; 10B), welcher eine mit einem Gasgenerator in Eingriff gelangende Öffnung (16) zum Zuführen von Gas in einem Rückabschnitt aufweist und welcher beim Aufblasen einem Insassen mit seinem Frontabschnitt zugewandt ist,
wobei das Innere des Airbags (10A; 10B) in ein zentrales erstes Abteil (1), welches der Öffnung zugewandt ist, und ein zweites Abteil (2; 3; 4), welches das erste Abteil (1) umringt, unterteilt ist,
wobei zumindest eine das erste Abteil (1) und das zweite Abteil (2; 3; 4) verbindende Kommunikationsöffnung (27) auf einer sich von einer entsprechenden Gasablassöffnung (36a; 52a; 60a) eines Gasgenerators (36; 36A) erstreckenden im Wesentlichen horizontalen Linie liegt, um so der Gasablassöffnung (36a; 52a; 60a) zugewandt zu sein, wenn der Airbag aufgeblasen wird,
**dadurch gekennzeichnet,**
**dass** der Airbag eine einzige innere Bahn bzw. Paneele (22) zum Unterteilen des Innenraums des Airbags (10) in das zentrale erste Abteil (1) und das das erste Abteil (1) umringende zweite Abteil (2) umfasst.

2. Airbag (10) nach Anspruch 1,
wobei der Frontabschnitt durch eine Frontbahn (12) gebildet ist, welche nahe einem Passagier angeordnet ist, und der Rückabschnitt durch eine rückwärtige Bahn (14), welche entfernt von dem Passagier angeordnet ist, gebildet ist, wobei die Umfangsabschnitte der Frontbahn (12) und der rückwärtigen Bahn (14) miteinander verbunden sind, und
wobei die rückwärtige Bahn (14) eine in ihrem zentralen Teil gebildete mit einem Gasgenerator in Eingriff gelangende Öffnung aufweist.

3. Airbag (10) nach Anspruch 1 oder Anspruch 2,
wobei die innere Bahn (22) eine in ihrem zentralen Teil ausgebildete Öffnung derart aufweist, dass sie fast konzentrisch mit der mit einem Gasgenerator in Eingriff gelangenden Öffnung (16) ist,
wobei der vordere Umfangsabschnitt der inneren Bahn (22) mit einem Zwischenabschnitt, welcher zwischen dem zentralen Abschnitt und dem Umfangsabschnitt einer Frontbahn (12) liegt, verbunden ist,
wobei die innere Bahn (22) die mindestens eine Kommunikationsöffnung (27) nahe ihrem hinteren Teil ausgebildet hat.

4. Airbag (10; 10A; 10B) nach einem der Ansprüche 1-3, wobei der rückwärtige Abschnitt zumindest ein darin ausgebildetes Belüftungsloch (18) aufweist, und zumindest ein inneres Belüftungsloch (28) zur wechselseitigen Kommunikation des ersten Abteils (1) und des zweiten Abteils (2; 3; 4) vorgesehen ist.

5. Airbag (10) nach einem der Ansprüche 1-4,
wobei das zweite Abteil (2) in eine Außenrandfrontkammer (4), welche an dem äußeren Rand des ersten Abteils (1) benachbart zu der Vorderseite angeordnet ist, und eine Außenrandrückkammer (3), welche an dem Außenrand des ersten Abteils (1) benachbart zu der Rückseite angeordnet ist, unterteilt ist,
wobei die Außenrandrückkammer (3) mit dem Äußeren des Airbags (10) über Entlüftungslöcher (18) kommuniziert,
das erste Abteil (1) direkt mit der Außenrandfrontkammer (4) und der Außenrandrückkammer (3) kommuniziert, wobei die mindestens eine Kommunikationsöffnung (27) das erste Abteil (1) mit der Außenrandrückkammer (3) verbindet,
die Außenrandfrontkammer (4) und die Außenrandrückkammer (3) miteinander nur über das erste Abteil (1) kommunizieren, und das Gas zum Aufblasen des Airbags (10) von dem ersten Abteil (1) in die Außenrandfrontkammer (4) und die Außenrandrückkammer (3) strömt.

6. Airbag (10A; 10B) nach einem der Ansprüche 1-4,
wobei das zweite Abteil (2) in eine Außenrandfrontkammer (4), welche an dem Außenrand des ersten Abteils (1) benachbart zu der Vorderseite angeordnet ist, und eine Außenrandrückkammer (3), welche an dem Außenrand des ersten Abteils (1) benachbart zu der Rückseite angeordnet ist, unterteilt ist,
die Außenrandrückkammer (3) mit dem Äußeren des Airbags (10A; 10B) über Entlüftungslöcher (18) kommuniziert,
das erste Abteil (1) mit der Außenrandfrontkammer (4) und der Außenrandrückkammer (3) direkt kommuniziert, wobei die mindestens eine Kommunikationsöffnung (27) das erste Abteil (1) mit der Außenrandrückkammer (3) verbindet,
die Außenrandfrontkammer (4) und die Außenrandrückkammer (3) direkt miteinander kommunizieren, und
das Gas zum Aufblasen des Airbags (10A; 10B) von dem ersten Abteil (1) in die Außenrandfrontkammer (4) und die Außenrandrückkammer (3) strömt.

7. Airbag (10; 10A; 10B) nach Anspruch 5 oder Anspruch 6,
wobei das erste Abteil (1) ausgestaltet ist, während des Aufblasens von der Rückseite zu der Frontseite des Airbags (10; 10A; 10B) zu reichen.

8. Airbagvorrichtung umfassend einen Airbag (10; 10A; 10B) nach einem der Ansprüche 1-7 und einen Gasgenerator (36; 36A) mit mindestens einer Gasablassöffnung (36a; 52a; 60a),
wobei zumindest die Front des Gasgenerators (36; 36A) in dem Airbag (10; 10A; 10B) angeordnet ist, und die Gasablassöffnung (36a; 52a; 60a) in dem Airbag (10; 10A; 10B) angeordnet ist.

9. Airbagvorrichtung nach Anspruch 8,
wobei die Anzahl der mindestens einen Gasablassöffnung (36a; 52a; 60a; 54a; 62a) und der mindestens einen Kommunikationsöffnung (27) eine Mehrzahl ist,
wobei jede der Kommunikationsöffnungen (27) auf einer sich von einer entsprechenden der Gasablassöffnungen (36a; 52a; 60a) erstreckenden im Wesentlichen horizontalen Linie angeordnet ist, um so der Gasablassöffnung (36a; 52a; 60a) zugewandt zu sein, wenn der Airbag aufgeblasen wird,
wobei keine das erste Abteil (1) und das zweite Abteil (2) verbindende Öffnung auf von den übrigen Gasablassöffnungen (54a; 62) sich erstreckenden im Wesentlichen horizontalen Linien liegt.

10. Airbagvorrichtung nach Anspruch 8 oder 9,
wobei das erste Abteil (1) und das zweite Abteil (2) sich fast gleichzeitig aufblasen, wenn der Gasgenerator (36; 36A) aktiviert wird.

11. Airbagvorrichtung nach einem der Ansprüche 8-10,
**dadurch gekennzeichnet, dass** der Gasgenerator (36; 36A) eine Vielzahl von zumindest ersten (52; 60) und zweiten (54; 62) Gaserzeugungseinheiten umfasst, wobei die Gaserzeugungseinheiten (52, 54; 60; 62) jeweils eine Gasablassöffnung (52a, 54a; 60a, 62a) umfassen, wobei die mindestens eine Kommunikationsöffnung (27) der Gasablassöffnung (52a; 60a) der ersten Gaserzeugungseinheit (52; 60) gegenüberliegt und die Gasablassöffnung (54a; 62a) der von der ersten Gaserzeugungseinheit (52; 60) verschiedenen Gaserzeugungseinheit (54; 62) in einem Zustand, in welchem der Airbag (10; 10A; 10B) entfaltet ist, nicht der mindestens einen Kommunikationsöffnung (27) gegenüberliegt.

12. Airbagvorrichtung umfassend einen Airbag (10; 10A; 10B) und einen Gasgenerator (36; 36A) zum Aufblasen des Airbags (10; 10A; 10B), wobei
der Airbag (10; 10A; 10B) ein Airbag wie in einem der Ansprüche 1-7 definiert ist, und
dem ersten Abteil (1) Gas von dem Gasgenerator (36; 36A) zugeführt wird.

13. Airbagvorrichtung umfassend:
einen Airbag (10; 10A; 10B) nach einem der Ansprüche 5-7,
einen Gasgenerator (36; 36A) umfassend eine Vielzahl von Gaserzeugungseinheiten (52, 54; 60, 62) mit unterschiedlichen Gaserzeugungszeitvorgaben.

14. Airbagvorrichtung nach Anspruch 13, wobei die Frontkammer (4) des Airbags (10B) im Wesentlichen die gesamte Front des Airbags (10B) einnimmt.

## Revendications

1. Coussin gonflable de sécurité *(airbag)* (10 ; 10A; 10B) ayant une ouverture de prise de générateur de gaz (16) pour amener du gaz dans une portion arrière et faisant face à un occupant, lors du gonflage sur une partie avant de celui-ci,
dans lequel l'intérieur du coussin gonflable (10A, 10B) est divisé en un premier compartiment central (1) faisant face à l'ouverture et un second compartiment (2, 3, 4) encerclant le premier compartiment (1)
dans lequel au moins un orifice de communication (27) reliant le premier compartiment (1) et le second compartiment (2, 3, 4) repose sur une ligne sensiblement horizontale, s'étendant depuis une ouverture de décharge de gaz correspondante (36a ; 52a ; 60a) d'un générateur de gaz (36 ; 36A), de façon à faire face à l'ouverture de décharge de gaz (36a ; 52a ; 60a) quand le coussin gonflable est gonflé ;
**caractérisé en ce que**
le coussin gonflable comprend un panneau interne unique (22) pour diviser l'espace intérieur du coussin gonflable (10) en le premier compartiment central (1) et le second compartiment (2) encerclant le premier compartiment (1).

2. Coussin gonflable (10) selon la revendication 1,
dans lequel la partie avant est formée d'un panneau avant (12) disposé près d'un passager et la portion arrière est formé d'un panneau arrière (14) disposé loin d'un passager, les parties circonférentielles du panneau avant (12) et du panneau arrière (14) étant reliées l'une à l'autre, et
dans lequel le panneau arrière (14) a une ouverture de prise de générateur de gaz formée sur sa partie centrale.

3. Coussin gonflable (10) selon la revendication 1 ou la revendication 2,
dans lequel le panneau interne (22) a une ouverture formée sur sa partie centrale, de façon à être presque concentrique avec l'ouverture de prise de générateur de gaz (16),
dans lequel la portion circonférentielle avant du panneau interne (22) est reliée à une portion intermédiaire reposant entre la portion centrale et la portion circonférentielle d'un panneau avant (12),
dans lequel le panneau interne (22) a l'au moins un orifice de communication (27) formé près de l'arrière de celui-ci.

4. Coussin gonflable (10, 10A, 10B) selon l'une quelconque des revendications 1 à 3, dans lequel la portion arrière a au moins un orifice d'aération (18) formé à l'intérieur, et au moins un orifice d'aération interne (28) est ménagé pour communication réciproque entre le premier compartiment (1) et le second compartiment (2, 3, 4).

5. Coussin gonflable (10) selon l'une quelconque des revendications 1 à 4, dans lequel le second compartiment (2) est divisé en une chambre avant périphérique extérieure (4) disposée sur la périphérie extérieure du premier compartiment (1) adjacent à la partie avant, et une chambre arrière périphérique extérieure (3) disposée sur la périphérie extérieure du premier compartiment (1) adjacent à la partie arrière ;
la chambre arrière périphérique extérieure (3) communique avec l'extérieur du coussin gonflable (10) à travers des orifices d'aération (18) ;
le premier compartiment (1) communique directement avec la chambre avant périphérique extérieure (4) et la chambre arrière périphérique extérieure (3), l'au moins un orifice de communication (27) reliant le premier compartiment (1) à la chambre arrière périphérique extérieure (3) ;
la chambre avant périphérique extérieure (4) et la chambre arrière périphérique extérieure (3) communiquent l'une avec l'autre uniquement via le premier compartiment (1) ; et
le gaz pour gonfler le coussin gonflable (10) s'écoule depuis le premier compartiment (1) dans la chambre avant périphérique extérieure (4) et la chambre arrière périphérique extérieure (3).

6. Coussin gonflable (10A, 10B) selon l'une quelconque des revendications 1 à 4,
dans lequel le second compartiment (2) est divisé en une chambre avant périphérique extérieure (4) disposée sur la périphérie extérieure du premier compartiment (1) adjacent à la partie avant et en une chambre arrière périphérique extérieure (3) disposée sur la périphérie extérieure du premier compartiment (1) adjacent à la partie arrière ;
la chambre arrière périphérique extérieure (3) communique avec l'extérieur du coussin gonflable (10A, 10B) à travers des orifices d'aération (18) ;
le premier compartiment (1) communique directement avec la chambre avant périphérique extérieure (4) et la chambre arrière périphérique extérieure (3), l'au moins un orifice de communication (27) reliant le premier compartiment (1) avec la chambre arrière périphérique extérieure (3) ;
la chambre avant périphérique extérieure (4) et la chambre arrière périphérique extérieure (3) communiquent directement l'une avec l'autre ; et
le gaz pour gonfler le coussin gonflable (10A, 10B) s'écoule du premier compartiment (1) dans la chambre avant périphérique extérieure (4) et la chambre arrière périphérique extérieure (3).

7. Coussin gonflable (10, 10A, 10B) selon la revendication 5 ou la revendication 6, dans lequel le premier compartiment (1) est disposé de façon à aller de la partie arrière à la partie avant du coussin gonflable (10, 10A, 10B) pendant le gonflage.

8. Appareil de sécurité à coussin gonflable comprenant un coussin gonflable (10, 10A, 10B) selon l'une quelconque des revendications 1 à 7, et un générateur de gaz (36, 36A) ayant au moins une ouverture de décharge de gaz (36a, 52a, 60a) ;
dans lequel au moins la partie avant du générateur de gaz (36, 36A) est disposée dans le coussin gonflable (10, 10A, 10B) et l'ouverture de décharge de gaz (36a, 52a, 60a) est disposée dans le coussin gonflable (10, 10A, 10B).

9. Appareil de sécurité à coussin gonflable selon la revendication 8, dans lequel il existe plusieurs ouvertures de décharge de gaz (36a, 52a, 60a, 54a, 62a) et plusieurs orifices de communication (27),
dans lequel chacun des orifices de communication (27) est disposé sur une ligne sensiblement horizontale s'étendant depuis une ouverture correspondante desdites ouvertures de décharge de gaz (36a, 52a, 60a) de façon à faire face à l'ouverture de décharge de gaz (36a, 52a, 60a) quand le coussin gonflable est gonflé,
dans lequel aucune ouverture reliant le premier compartiment (1) et le second compartiment (2) ne repose sur des lignes sensiblement horizontales s'étendant depuis les ouvertures de décharge de gaz (54a, 62a).

10. Appareil de sécurité à coussin gonflable selon la revendication 8 ou 9,
dans lequel le premier compartiment (1) et le second compartiment (2) se gonflent presque simultanément quand le générateur de gaz (36, 36A) est activé.

11. Appareil de sécurité à coussin gonflable selon l'une quelconque des revendications 8 à 10, **caractérisé en ce que** le générateur de gaz (36, 36A) comprend une pluralité, au moins de premières (52, 60) et secondes (54, 62) unités de génération de gaz, les unités de génération de gaz (52, 54, 60, 62) comprenant chacune une ouverture de décharge de gaz (52a, 54a, 60a, 62a), l'au moins un orifice de communication (27) oppose l'ouverture de décharge de gaz (52a, 60a) de la première unité de génération de gaz (52, 60) et l'ouverture de décharge de gaz (54a, 62a) de l'unité de génération de gaz (54, 62), autrement que la première unité de génération de gaz (52, 60), laquelle n'oppose pas l'au moins un orifice de communication (27) lorsque le coussin gonflable (10, 10A, 10B) est déployé.

12. Appareil de sécurité à coussin gonflable comprenant un coussin gonflable (10, 10A, 10B) et un générateur de gaz (36, 36A) pour gonfler le coussin gonflable (10, 10A, 10B), dans lequel :
le coussin gonflable (10, 10A, 10B) est un coussin gonflable, comme défini dans n'importe laquelle des revendications 1 à 7, et
le gaz provenant du générateur de gaz (36, 36A) est amené au premier compartiment (1).

13. Appareil de sécurité à coussin gonflable comprenant :
un coussin gonflable (10, 10A, 10B) selon l'une quelconque des revendications 5 à 7 ;
un générateur de gaz (36, 36A) comprenant une pluralité d'unités de génération de gaz (52, 54, 60, 62) avec des moments de génération de gaz différents.

14. Appareil de sécurité à coussin gonflable selon la revendication 13, dans lequel la chambre avant (4) du coussin gonflable (10B) occupe sensiblement l'ensemble de la partie avant du coussin gonflable (10B).
